(19) Europäisches Patentamt
European Patent Office
Office européen des brevets

(11) Publication number: 0 142 706 A2

# (12) EUROPEAN PATENT APPLICATION

(21) Application number: 84112459.7

(51) Int. Cl.[4]: G 03 B 42/02

(22) Date of filing: 16.10.84

(30) Priority: 20.10.83 JP 196470/83

(43) Date of publication of application: 29.05.85 Bulletin 85/22

(84) Designated Contracting States: DE FR NL

(71) Applicant: FUJI PHOTO FILM CO., LTD.
210 Nakanuma Minamiashigara-shi
Kanagawa-ken, 250-01(JP)

(72) Inventor: Adachi, Yuuma c/o Fuji Photo Film Co., Ltd.
798 Miyanodai Kaisei-machi
Ashigarakami-gun Kanagawa-ken(JP)

(72) Inventor: Ishida, Masamitsu c/o Fuji Photo Film Co., Ltd.
798 Miyanodai Kaisei-machi
Ashigarakami-gun Kanagawa-ken(JP)

(74) Representative: Kador . Klunker . Schmitt-Nilson . Hirsch
Corneliusstrasse 15
D-8000 München 5(DE)

## (54) X-ray photographing system.

(57) An X-ray photographing system is provided with an irradiation field stop, near an X-ray source, for limiting the size of the region exposed to X-rays, and a receiving side stop for defining X-rays passing through an object to impinge upon a recording medium with an aperture the size of which corresponds to the size of the irradiation field defined by the irradiation field stop. An interlocking means the receiving side stop to adjust the size of the aperture defined by the receiving side stop in response to the irradiation field stop.

FIG.1
11
12
l
d
13
16
INTERLOCK
L
10
17a
17
14
15
D

EP 0 142 706 A2

## BACKGROUND OF THE INVENTION

### Field of the Invention

This invention relates to an X-ray photographing system, and more particularly to an X-ray photographing system for recording an X-ray transmission image of an object on an X-ray photographic film or a stimulable phosphor sheet.

### Description of the Prior Art

X-ray photographing systems are widely used in industrial and medical fields. There has been known an X-ray photographing system having an irradiation field stop provided near an X-ray source to limit the irradiation field, that is, to limit the part of the object exposed to X-rays. Expecially in the medical field, it is important to prevent parts of the human body not related to the diagnosis from being exposed to X-rays. Further, when X-rays are irradiated upon an object not only in its part desired to be diagnosed or observed but also outside the part, the X-rays scattered by the object outside said part impinge upon the recording medium in its region to record the X-ray image of said part of the object, whereby the contrast and the quality of the obtained X-ray transmission image are lowered.

The X-ray photographing system provided with the irradiation field stop is advantageous in that it can limit the region of the object to be exposed to X-rays. However, there is a problem that X-rays scattered from the object in the irradiation field impinge upon the recording medium in the region outside the image of the object in the irradiation field recorded thereon to form a ghost image or noise around the image of the object. The noise around the image of the object is visually troublesome, and when such noise is recorded on a recording medium having a wide latitude it is especially troublesome since it impairs the appearance of the part around the image of the object when the image is finally made visible. Further, in image processing systems in which information for image processing is obtained by photoelectrically reading the X-ray transmission image recorded on a recording medium, such noise recorded on the recording medium outside the region where the image of the object is recorded adversely affects the result of image processing, and accordingly is not preferable.

When certain kinds of phosphors are exposed to such radiation as X-rays, α-rays, β-rays or ultraviolet rays, they store a part of the energy of the radiation. Then when the phosphor which has been exposed to the radiation is exposed to stimulating rays such as a visible ray, light is emitted from the phosphor in proportion to the stored energy of the radiation. A phosphor exhibiting such a property is referred to as a stimulable phosphor. As disclosed in Japanese Unexamined Patent Publication Nos. 55(1980)-163472, 55(1980)-12429, 56(1981)-11395, 55(1980)-116340, and U.S. Patent Nos. 4,258,264 and 4,276,473, it has been proposed to use a stimulable phosphor for recording and reproducing a radiation image of the human body for medical diagnosis. Specifically, a stimulable phosphor sheet having a stimulable phosphor layer is first exposed to a radiation transmitting through an object to record a radiation transmission image of the object thereon, and is then scanned with a stimulating ray which causes it to emit light in the pattern of the stored image. The light emitted from the stimulable phosphor sheet upon stimulation thereof is photoelectrically detected and converted into an electric image signal, which is processed as desired to reproduce a radiation image of a quality suitable for viewing and diagnostic purposes. In the radiation image recording and reproducing system using such a stimulable phosphor sheet, said noise is particularly troublesome since the stimulable phosphor sheet has a wide latitude.

Particularly, in the X-ray image recording and reproducing system disclosed in Japanese Unexamined Patent Publication Nos. 58(1983)-67240, 58(1983)-67242 and 58(1983)-67243, for instance, in which the image recorded on the stimulable phosphor sheet is roughly read (pre-reading) prior to regular reading to set the reading conditions for the regular reading and the image processing conditions, said noise around the image of the object is apt to adversely affect the result of the pre-reading so that wrong or incomplete information may be obtained and the conditions of the regular reading and the image processing are incorrectly set.

## SUMMARY OF THE INVENTION

In view of the foregoing observations and description, the primary object of the present invention is to provide an improved X-ray photographing system in which scattered X-rays from the irradiation field are prevented from impinging upon the recording medium to record noise around the image of the object.

The X-ray photographing system in accordance with the present invention is provided with a receiving side stop which defines X-rays passing through an object to impinge upon a recording medium with an aperture the size of which corresponds to the size of an irradiation field defined by an irradiation field stop provided near the X-ray source and interlocked with said receiving side stop, thereby preventing the part of the recording medium around the irradiation field from being exposed to X-rays.

Generally, the receiving side stop is actuated in response to the irradiation field stop so that the size D of the aperture defined by the receiving side stop is adjusted with respect to the size $\underline{d}$ of the aperture defined by the irradiation field stop to satisfy the relation represented by formula $D=dL/l$, wherein $\underline{l}$ and L respectively represent the distance between the X-ray source and the irradiation field stop, and the distance between the X-ray source and the receiving side stop. The receiving side stop is mechanically or electrically interlocked with the field irradiation stop to be actuated in response to the setting thereof.

## BRIEF DESCRIPTION OF THE DRAWINGS

Figure 1 is a schematic view showing the basic arrangement of the X-ray photographing system in accordance with the present invention, and

Figure 2 is a schematic view showing an X-ray photographing system in accordance with an embodiment of the present invention.

DESCRIPTION OF THE PREFERRED EMBODIMENT

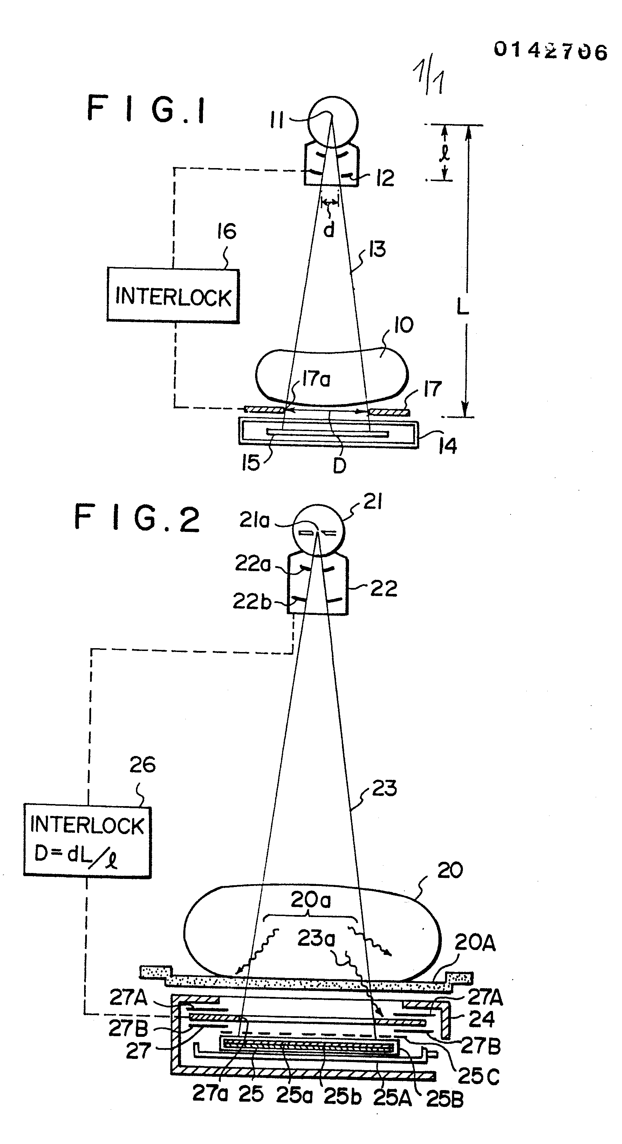

Figure 1 is a schematic view showing the basic arrangement of an X-ray photographing system in accordance with an embodiment of the present invention. In Figure 1, an irradiation field stop 12 is disposed near an X-ray source 11. X-rays 13 emitted from the X-ray source 11 and passing through the irradiation field stop 12 impinge upon an X-ray transmission image recording medium 15 accommodated in a casing 14 (e.g., an X-ray film cassette) to be supported thereby, after passing through an object 10.

A receiving side stop 17 is mounted on the front face of the casing 14. The receiving side stop 17 is interlocked with the irradiation field stop 12, by way of an interlocking means 16, to provide the X-rays 13 with an aperture 17a corresponding to the irradiation field defined by the irradiation field stop 12.

When the size of the aperture defined by the irradiation field stop 12 is represented by $\underline{d}$, the size D of the aperture 17a to be defined by the receiving side stop 17 depends upon the distance $\underline{l}$ between the X-ray source 11 and the irradiation field stop 12 and the distance L between the X-ray source 11 and the receiving side stop 17, and is represented by formula $D=dL/l$, assuming that the X-rays passing through the center of the receiving side stop 17 impinge upon the recording medium 15 perpendicularly thereto. The interlocking means 16 is arranged to actuate the receiving side stop 17 in response to the setting of the irradiation field stop 12 so that the size D of the aperture 17a defined by the receiving side stop 17 is adjusted with respect to the size d of the aperture defined by the irradiation field stop 12 to satisfy the relation represented by the above formula.

In this specification, the term "the size" of the aperture defined by the irradiation field stop 12 or the receiving side stop 17 should be regarded as denoting the diameter of the aperture when it is circular in shape. When the apertures defined by the irradiation field stop 12 and the receiving side stop 17 are not circular in shape, e.g., when they are rectangular in shape, they should be of similar shapes having the center of similitude on the X-ray source 11, and the term "the size" of the apertures should be regarded as denoting corresponding diagonal lines or sides.

Now, a concrete example of the structure of an X-ray photographing system in accordance with an embodiment of the present invention will be described with reference to Figure 2.

In Figure 2, a collimator 22 having first and second stops 22a and 22b is disposed on the lower side of an X-ray tube 21 as the irradiation field stop. X-rays 23 emitted from the X-ray tube 21 and confined by the first and second stops 22a and 22b of the collimator 22 pass through part of an object 20 on a bed 20A in an irradiation field 20a and impinge upon a recording plate 25 through a grid 25c. In this particular embodiment the recording plate 25 is a stimulable phosphor sheet comprising a base sheet 25b bearing thereon a stimulable layer 25a and is accommodated in a cassette 25B placed on a recording plate supporter 25A in a casing 24. In the casing 24 is provided a shielding plate 27 which, as said receiving side stop, defines an aperture 27a. The shielding 27 is arranged to be movable under the guidance of guide rails 27A and 27B to change the size of the aperture 27a. An interlocking means 26 drives the shielding plate 27 so that the size (D) of the aperture 27a defined by the shielding plate 27 is adjusted with respect to the size (d) of the aperture defined by the collimator 22, i.e., the aperture defined by the first stop 22a or the second stop 22b, to satisfy the relation represented by said formula $D=dL/l$, wherein $l$ and L respectively represent the distance between the X-ray generating point 21a of the X-ray tube 21 and the first stop 22a or second stop 22b defining the size $d$ of the aperture of the collimator 22, and the distance between the X-ray generating point 21a and light shielding plate 27. The distances $l$ and L and the size $d$ are detected by means of a potentiometer, a photoelectrical position detector or the like, and are input into the interlocking means 26. The interlocking means 26 calculates the size D of the aperture 27a to be defined by the shielding plate 27 on the basis of the values of $d$, $l$ and L according to the formula $D=dL/l$, and outputs the calculated value of D to adjust the size of the aperture 27a defined by the shielding plate 27 by way of a step motor or a servomotor.

By thus adjusting the size of the aperture 27a defined by the shielding plate 27 according to the size of the aperture defined by the collimator 22 or the size of the irradiation field, the part of the recording plate 25 around the irradiation field can be prevented from being exposed to X-rays scattered by the part of the object 20 in the irradiation field 20a.

Though the size D of the aperture 27a defined by the shielding plate 27 precisely corresponds to the size of the irradiation field defined by the collimator 22, that is, D=dL/l, in the embodiment shown in Figure 2, it may be somewhat smaller than the value determined by the formula. In this case, the reduction of the size D of the aperture 27a can be compensated for by making the size of the irradiation field defined by the collimetor 22 somewhat larger than the size to be finally recorded on the recording plate 25. This is advantageous in that a lower degree of accuracy will be required in control of the shielding plate 27.

Though in the above embodiment, X-rays impinge upon the recording medium substantially in perpendicular thereto, the present invention can be applied to X-ray photographing systems in which X-rays obliquely impinge upon the recording medium. In this case, of course, the formula D=dL/l must be modified according to the obliquity of the X-rays with respect to the recording medium.

# C L A I M S

1. An X-ray photographing system comprising an X-ray source, a recording medium supporter for supporting an X-ray transmission image recording medium which is adapted to be exposed to the X-rays from the X-ray source after passing through an object, and an irradiation field stop which is provided near the X-ray source to limit the irradiation field on the recording medium to be exposed to the X-rays, characterized by having a receiving side stop disposed on the front side of said recording medium supporter to define the X-rays from the X-ray source with an aperture the size of which corresponds to the size of the irradiation field defined by said irradiation field stop, and an interlocking means for actuating the receiving side stop to adjust the size of the aperture defined by the receiving side stop in response to the setting of the irradiation field stop.

2. An X-ray photographing system as defined in Claim 1 in which said interlocking means actuates said receiving side stop in response to the setting of the irradiation field stop so that the size D of the aperture defined by the receiving side stop is adjusted with respect to the size $\underline{d}$ of the aperture defined by the irradiation field stop to satisfy the relation represented by the formula $D=dL/l$, wherein $\underline{l}$ and L respectively represent the distance between the X-ray source and the irradiation field stop, and the distance between the X-ray source and the receiving side stop.

3. An X-ray photographing system as defined in Claim 1 or 2 in which said recording medium is a stimulable phosphor sheet.

F I G.1
11
12
ℓ
d
13
16
INTERLOCK
L
10
17a
17
14
15
D
F I G.2
21a
21
22a
22
22b
26
23
INTERLOCK
D=dL/ℓ
20
20a
23a
20A
27A
27A
24
27B
27B
27
25C
27a
25
25a
25b
25A
25B